(19) **Europäisches Patentamt / European Patent Office / Office européen des brevets**

(11) **EP 4 147 935 B1**

(12) **EUROPEAN PATENT SPECIFICATION**

(45) Date of publication and mention
of the grant of the patent:
**08.10.2025 Bulletin 2025/41**

(21) Application number: **20932862.4**

(22) Date of filing: **17.08.2020**

(51) International Patent Classification (IPC):
$G01G\ 19/08^{(2006.01)}$ $\quad$ $B60W\ 40/13^{(2012.01)}$
$B60W\ 40/076^{(2012.01)}$ $\quad$ $G01D\ 1/16^{(2006.01)}$
$G06F\ 17/40^{(2006.01)}$

(52) Cooperative Patent Classification (CPC):
**B60W 40/13; G01G 19/086;** B60W 2510/0657;
B60W 2556/10; G06F 17/40

(86) International application number:
**PCT/CN2020/109545**

(87) International publication number:
**WO 2021/217957 (04.11.2021 Gazette 2021/44)**

(54) **METHOD FOR CALCULATING MASS OF VEHICLE, AND TERMINAL DEVICE AND STORAGE MEDIUM**

VERFAHREN ZUR BERECHNUNG DER MASSE EINES FAHRZEUGS SOWIE ENDGERÄTEVORRICHTUNG UND SPEICHERMEDIUM

PROCÉDÉ DE CALCUL DE MASSE DE VÉHICULE, ET DISPOSITIF TERMINAL ET SUPPORT DE STOCKAGE

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **28.04.2020 CN 202010347509**

(43) Date of publication of application:
**15.03.2023 Bulletin 2023/11**

(73) Proprietor: **Xiamen Yaxon Zhilian Technology Co., Ltd.**
**Xiamen, Fujian 361000 (CN)**

(72) Inventors:
• **TU, Yankai**
**Xiamen, Fujian 361000 (CN)**
• **CHEN, Yuan**
**Xiamen, Fujian 361000 (CN)**

(74) Representative: **Hofmann, Andreas**
**RGTH Patentanwälte PartGmbB**
**Leopoldstraße 23**
**80802 München (DE)**

(56) References cited:
CN-A- 103 534 563 $\quad$ CN-A- 104 773 176
CN-A- 107 310 558 $\quad$ CN-A- 108 896 149
DE-A1- 4 228 413 $\quad$ US-A1- 2006 149 424
US-B2- 10 094 704

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

## Description

## TECHNICAL FIELD

The present disclosure relates to the field of vehicle control, and in particular, to a method, a terminal device and a storage medium for computing a vehicle mass.

## BACKGROUND

Total vehicle mass is important information for commercial vehicles, and obtaining total mass data can help prevent overloading, or can be controlled in conjunction with safety and fuel-saving functions. The existing methods of obtaining the total mass of commercial vehicles include sensor acquisition, dynamic estimation and the like.

The sensor acquisition method has the disadvantages of difficult installation, and the sensor is easily damaged due to the harsh external operating environment of commercial vehicles such as trucks. The dynamic estimation method is often affected by external operating conditions and environmental parameters (such as wind resistance, road friction coefficient, etc.), such that calculating is difficult. In the dynamic estimation method, the vehicle must have acceleration. Otherwise, if the acceleration is 0, the denominator of the dynamic formula for calculating the load by dividing the torque by the acceleration will be 0, and the formula cannot solve the mass. In some existing methods (such as CN101443636A, CN108896149A), the difference between adjacent states is used to offset the environmental parameters, but when the mass is finally calculated by this type of method, the denominator is the differential value of acceleration, which means that this type of method is only suitable for large changes in acceleration before and after. It is not suitable for relatively uniform speed or uniform acceleration conditions (otherwise the denominator of the final calculation formula is 0), but uniform speed conditions often occupy most of the time of vehicle running, especially for vehicles driving on highways. It is less to satisfy the condition that the acceleration is not zero and continuously changing. Further state of the art is patent document US 10 094 704 B2.

## DISCLOSURE OF THE INVENTION

In order to solve the above problems, the present disclosure provides a method, a terminal device and a storage medium for computing a vehicle mass.

The specific solutions are as follows:

A method for computing a vehicle mass, comprising steps of:

S1: collecting engine torque data and electronic horizon data of a vehicle in real time, and setting a time interval T;

S2: determining, according to the electronic horizon data, whether two sampling points whose gradient value difference between a post sampling point and a previous sampling point is greater than a gradient value difference threshold exist within the time interval T continuously before a current time; and then entering S3 until they exist;

S3: determining, according to the electronic horizon data, whether the two sampling points are on a same road; if so, entering S4; otherwise, returning to S2;

S4: determining, according to the electronic horizon data, whether the road between the two sampling points is a straight road; if so, entering S5; otherwise, returning to S2;

S5: determining whether a difference between engine torques corresponding to the post sampling point and the previous sampling point is greater than a torque difference threshold; if so, entering S6; otherwise, returning to S2;

S6: calculating the vehicle mass according to the engine torques and gradient values corresponding to the two sampling points.

In an embodiment, a calculation formula of the vehicle mass in step S6 is:

$$m = \frac{F_2 - F_1}{\theta_2 - \theta_1};$$

where m represents the vehicle mass; $F_2$ and $F_1$ represent driving forces calculated by the engine torques of the post and previous sampling points, respectively; and $\theta_1$ and $\theta_2$ represent the gradient values of the post and previous sampling points, respectively.

In an embodiment, the gradient value difference threshold is greater than 0.4.

In an embodiment, the torque difference threshold is greater than 40% of a maximum output power of a vehicle engine.

A terminal device for computing a vehicle mass, comprising a processor, a memory, and a computer program stored in the memory and executed on the processor, wherein when the computer program is executed by a processor, the steps of the method provided by the above embodiment are implemented.

A computer-readable storage medium storing a computer program, wherein when a computer program is executed by a processor, the steps of the method provided by the above embodiment are implemented.

The method in the present embodiment can enable the vehicle to calculate its mass even when it is running at a constant speed, but requires that within the time interval T, the terrain has a relatively large change to ensure the calculation conditions of $\theta_2 - \theta_1 >> \varepsilon$ and $F_2 - F_1 >> \sigma$, in order to obtain more accurate calculation results. Therefore, it is suitable to be used in hilly conditions with large terrain changes in combination with the electronic horizon. The applicable working conditions of this method are different from the variable acceleration working conditions, so the present embodiment can also be used in combination with the method for calculating a mass in the variable acceleration working condition, and different calculation methods can be switched in different working conditions, so as to improve the universality of the application.

**BRIEF DESCRIPTION OF THE DRAWINGS**

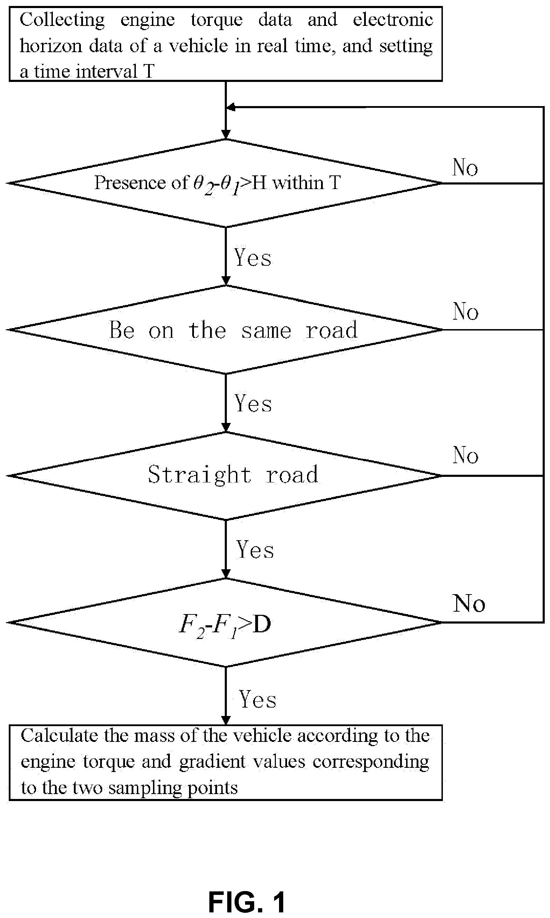

FIG. 1 is a flowchart of Embodiment 1 according to the present disclosure.

**DESCRIPTION OF EMBODIMENTS**

To further illustrate the various embodiments, the present disclosure is provided with the accompanying drawing. The drawing is a part of the disclosure of the present disclosure, which is mainly used to illustrate the embodiments, and can be used in conjunction with the relevant description of the specification to explain the operation principles of the embodiments. With reference to these contents, one of ordinary skill in the art will understand other possible embodiments and advantages of the present disclosure.

The present disclosure will now be further described with reference to the accompanying drawing and specific embodiments.

Embodiment 1:

The embodiment of the present disclosure provides a method for computing a vehicle mass, and its calculation principle is first introduced.

The dynamic equation of the vehicle during driving is:

$$F = F_a + F_{rot} + F_{slope} + \mathbf{F}_{win} \; ;$$

where F represents the driving force of the engine output torque acting on the wheels through the transmission system; $F_a$ represents the force that causes the vehicle to accelerate; $F_{rot}$ represents the frictional resistance between the wheels and the ground; $F_{slope}$ represents the gravitational resistance of the slope; and $F_{win}$ represents the wind resistance of the vehicle.

The above parameters are calculated by the following formulas:

$$F_a = ma \; ;$$

where m represents the vehicle mass, and a represents the acceleration.

$$F_{rot} = mg\mu \; ;$$

where $\mu$ is the friction coefficient of the road surface, and g is the acceleration of gravity.

$$F_{slope} = mg\theta \; ;$$

where $\theta$ represents the road gradient.

$$F_{win} = \frac{C_d H V_a^2}{21.15};$$

where $C_d$ represents the air density, H represents the windward area of the vehicle, and $V_a$ represents the windward wind speed, including the forward speed of the vehicle and the current wind speed outside.

Therefore, it can be concluded that:

$$F = ma + mgu + mg\theta + \frac{C_d H V_a^2}{21.15} \qquad (1)$$

A time period T (= T2 - T1) is formed by two adjacent moments T1 and T2. In the present embodiment, T is preferably set to be the least common multiple of the vehicle bus data and the electronic horizon data collection cycle, that is, at the moments of T1 and T2, the latest real-time bus data and electronic horizon data can be obtained at the same time. After taking the difference of Formula (1), Formula (2) is obtained:

$$F_2 - F_1 = m(a_2 - a_1) + mg(\mu_2 - \mu_1) + mg(\theta_2 - \theta_1) + \frac{C_d H (V_{a1}^2 - V_{a2}^2)}{21.15} \qquad (2)$$

According to the collected road information in the electronic horizon, it can be determined whether the vehicle is running on the same road. When running on the same road, the road friction coefficient $\mu$ values at moment T1 and moment T2 are approximately equal, that is, in Formula (2), $mg(\mu_2 - \mu_1) = 0$.

When the vehicle is running at a constant speed, the acceleration a may be approximately equal to 0, but in fact, it is difficult to achieve the acceleration a completely 0. For example, in the state of automatic cruise control, the cruise control system needs to continuously adjust the engine output to keep the vehicle speed stable, and there is actually a slight acceleration/deceleration; and if the accelerator is manually operated to maintain a constant speed, there is also an error in the control accuracy. Therefore, even if the vehicle is in a constant speed state, the acceleration a will not be 0. Therefore, in the present embodiment, $a_2 - a_1$ set in Formula (2) is replaced by a relatively small constant $\varepsilon$.

At the same time, due to running at the constant speed, the wind resistance of the vehicle caused by the difference in vehicle speed is approximately equal, but the wind resistance caused by the difference of the external wind is different. Since the data collection periods of the bus and the electronic horizon are relatively short, that is, the time of T is relatively short, and the change of the external wind is relatively small, so $\dfrac{C_d H (V_{a1}^2 - V_{a2}^2)}{21.15}$ in Formula (2) can also be replaced by a small constant $\sigma$.

To sum up, Formula (2) can be expressed as:

$$F_2 - F_1 = m\varepsilon + mg(\theta_2 - \theta_1) + \sigma \qquad (3)$$

Then, the formula for solving the vehicle mass m is:

$$m = \frac{F_2 - F_1 - \sigma}{\varepsilon + \theta_2 - \theta_1} \qquad (4)$$

It can be seen from Formula (4) that $F_2$ and $F_1$ are driving forces calculated by the engine torques that can be obtained from the bus, and $\theta_1$ and $\theta_2$ are the data that can be obtained from the electronic horizon system, but the values of the constants $\sigma$ and $\varepsilon$ cannot be obtained directly.

Since the values of $\sigma$ and $\varepsilon$ are small, in order to make the solution result of m as accurate as possible, it can be seen from Formula (4) that the conditions that need to be met are: $\theta_2 - \theta_1 >> \varepsilon$ and $F_2 - F_1 >> \sigma$, where >> means "much larger than".

Therefore, in order to achieve the above conditions to ensure the accuracy of m solution result, as shown in FIG. 1, the specific implementation process of the method for computing a vehicle mass in the present embodiment is:

S1: collecting engine torque data and electronic horizon data of the vehicle in real time, and setting a time interval T.

S2: determining, according to the electronic horizon data, whether two sampling points whose gradient value difference between a post sampling point and a previous sampling point is greater than a gradient value difference threshold H exist within the time interval T continuously before the current time; and then entering S3 until they exist.

It should be noted that the post sampling point is the sampling point collected close to the current moment, and the previous sampling point is the sampling point collected far away from the current moment.

In the present embodiment, the post sampling point may be represented by subscript 2 and the previous sampling point may be represented by subscript 1, then the gradient value of the post sampling point is $\theta_2$, and the gradient value of the previous sampling point is $\theta_1$.

Due to the conditions that $\theta_2 - \theta_1 >> \varepsilon$ need to be met, $\theta_2 - \theta_1$ is larger than a larger value. In the present embodiment, the gradient value difference threshold H may be set to be larger than 0.4.

Through experiments, it may be found that most of the cases that meet the above conditions are that the previous sampling point is a downhill point, and the post sampling point is an uphill point, and the slope value of the downhill point is a negative number.

S3: determining, according to the electronic horizon data, whether the two sampling points are on a same road; if so, entering S4; otherwise, returning to S2.

The determination of whether the road surface is on the same road is for satisfying the condition that the road surface friction coefficient $\mu$ is approximately equal.

S4: determining, according to the electronic horizon data, whether the road between the two sampling points is a straight road; if so, entering S5; otherwise, returning to S2.

A straight road is a road that is straight. If the road between the two sampling points is not a straight road, then cornering resistance will exist in Formula (1), and Formula (1) cannot be applied.

S5: determining whether a difference between engine torques corresponding to the post sampling point and the previous sampling point is greater than a torque difference threshold; if so, entering S6; otherwise, returning to S2.

In the present embodiment, the driving force calculated by the engine torque at the post sampling point is denoted as $F_2$, and the driving force calculated by the engine torque at the previous sampling point is denoted as $F_1$. Due to the conditions that $F_2 - F_1 >> \sigma$ need to be met, $F_2 - F_1$ should be a larger value. It may be found through experiments that the calculation result is the best when the torque difference threshold D is greater than 40% of the maximum output force of the vehicle engine.

S6: calculating the vehicle mass according to the engine torques and gradient values corresponding to the two sampling points.

Through the above steps, $\sigma$ and $\varepsilon$ in the calculation formula of the original vehicle mass m (Formula (4)) can be ignored, so the simplified calculation formula of the vehicle mass m is:

$$m = \frac{F_2 - F_1}{\theta_2 - \theta_1}.$$

The method in the present embodiment can enable the vehicle to calculate its mass even when it is running at a constant speed, but requires that within the time interval T, the terrain has a relatively large change to ensure the calculation conditions of $\theta_2 - \theta_1 >> \varepsilon$ and $F_2 - F_1 >> \sigma$, in order to obtain more accurate calculation results. Therefore, it is suitable for use in combination with electronic horizon in hilly conditions with large terrain changes. The applicable working conditions of this method are different from the variable acceleration working conditions, so the present embodiment can also be used in combination with the calculation mass method in the variable acceleration working condition. Different calculation methods can be switched in different working conditions, so as to improve the universality of the application.

The mass calculated in the present embodiment can be used in subsequent safe driving supervision, such as displaying the mass on the display screen. When the mass exceeds the load limit, an alarm signal such as sound and light may be issued, or safety control such as locking, torque limiting, etc. can be carried out, forcing drivers not to overload transportation. Mass can also be transmitted to the safety supervision centre through TBOX, driving recorder, etc. for supervision and law enforcement.

Embodiment 2:

The present disclosure also provides a terminal device for computing a vehicle mass, comprising a memory, a processor, and a computer program stored in the memory and executed on the processor. When the computer program is executed by a processor, the steps of the method provided by Embodiment 1 according to the present disclosure are implemented.

Further, as an executable solution, the device for computing a vehicle mass may be a computing device such as a vehicle-mounted computer, a cloud server and the like. The device for computing a vehicle mass may include, but is not limited to, a processor and a memory. Those skilled in the art can understand that the composition structure of the above-mentioned device for computing a vehicle mass may be only an example of the device for computing a vehicle mass, and does not constitute a limitation on the device for computing a vehicle mass, and may include more or fewer components than the above. Alternatively, some components can be combined with. Alternatively, different components can be included. For example, the device for computing a vehicle mass may further include an input/output device, a network access device, a bus, etc., which is not limited in the present embodiment of the present disclosure.

Further, as an executable solution, the so-called processor may be a central processing unit (CPU), and may also be other general-purpose processor, digital signal processor (DSP), application specific integrated circuits (ASIC), field-programmable gate array (FPGA) or other programmable logic devices, discrete gate or transistor logic devices, discrete hardware components, etc. The general-purpose processor can be a microprocessor, or the processor can also be any conventional processor, etc. The processor is the control centre of the device for computing a vehicle mass, and uses various interfaces and lines to connect all parts of the entire terminal device for computing a vehicle mass.

The memory can be used to store the computer program and/or module. The processor implements various functions of the terminal device for computing a vehicle mass by running or executing the computer programs and/or modules stored in the memory, and calling the data stored in the memory, various functions of the terminal device for computing a vehicle mass. The memory may mainly include a program storing area and a data storing area. Among them, the program storing area may store an operating system and an application program required for at least one function; the data storing area may store data created according to the use of the mobile phone, and the like. In addition, the memory may include high-speed random access memory, and may also include non-volatile memory such as hard disc, internal memory, plug-in hard disc, smart media card (SMC), secure digital (SD) card, flash card, at least one magnetic disc storage device, flash memory device, or other volatile solid-state storage device.

The present disclosure further provides a computer-readable storage medium, where a computer program is stored in the computer-readable storage medium, and when the computer program is executed by a processor, the steps of the foregoing method in the embodiment of the present disclosure are implemented.

If the modules/units integrated in the device for computing a vehicle mass are implemented in the form of software functional units and sold or used as independent products, they may be stored in a computer-readable storage medium. Based on this understanding, the present disclosure can implement all or part of the processes in the methods of the above embodiments, and can also be completed by instructing relevant hardware through a computer program. The computer program can be stored in a computer-readable storage medium. When the program is executed by the processor, the steps of the foregoing method in the embodiments can be implemented. Wherein, the computer program may include computer program code, and the computer program code may be in the form of source code, object code, executable file or some intermediate form, and the like. The computer-readable medium may include: any entity or device capable of carrying the computer program code, a recording medium, a U disc, a removable hard disc, a magnetic disc, an optical disc, a computer memory, a read-only memory (ROM), random access memory (RAM), and software distribution media.

## Claims

1.   A method for computing a vehicle mass, comprising steps of:

   S1: collecting engine torque data and electronic horizon data of a vehicle in real time, and setting a time interval T;
   S2: determining, according to the electronic horizon data, whether two sampling points whose gradient value difference between a post sampling point and a previous sampling point is greater than a gradient value difference threshold exist within the time interval T continuously before a current time; and then entering S3 until they exist;
   S3: determining, according to the electronic horizon data, whether the two sampling points are on a same road; if so, entering S4; otherwise, returning to S2;
   S4: determining, according to the electronic horizon data, whether the road between the two sampling points is a straight road; if so, entering S5; otherwise, returning to S2;
   S5: determining whether a difference between engine torques corresponding to the post sampling point and the previous sampling point is greater than a torque difference threshold; if so, entering S6; otherwise, returning to S2; and
   S6: calculating the vehicle mass according to the engine torques and gradient values corresponding to the two sampling points.

2.   The method for computing a vehicle mass according to claim 1, wherein a calculation formula of the vehicle mass in step S6 is:

$$m = \frac{F_2 - F_1}{\theta_2 - \theta_1}$$

where m represents the vehicle mass; $F_2$ and $F_1$ represent driving forces calculated by the engine torques of the post and previous sampling points, respectively; and $\theta_1$ and $\theta_2$ represent the gradient values of the post and previous sampling points, respectively.

3. The method for computing a vehicle mass according to claim 1, wherein the gradient value difference threshold is greater than 0.4.

4. The method for computing a vehicle mass according to claim 1, wherein the torque difference threshold is greater than 40% of a maximum output power of a vehicle engine.

5. A terminal device for computing a vehicle mass, comprising a processor, a memory, and a computer program stored in the memory and executed on the processor, wherein when the computer program is executed by a processor, the steps of the method according to any one of claims 1 - 4 are implemented.

6. A computer-readable storage medium storing a computer program, wherein when a computer program is executed by a processor, the steps of the method according to any one of claims 1 - 4 are implemented.

**Patentansprüche**

1. Verfahren zum Berechnen einer Fahrzeugmasse, aufweisend die folgenden Schritte:

S1: Erfassen der Motordrehmomentdaten und der elektronischen Horizontdaten eines Fahrzeugs in Echtzeit und Einstellen eines Zeitintervalls T;
S2: Bestimmen gemäß den elektronischen Horizontdaten, ob zwei Abtastpunkte, deren Gradientenwertdifferenz zwischen einem Nach-Abtastpunkt und einem Vor-Abtastpunkt größer als ein Gradientenwertdifferenz-Schwellenwert ist, innerhalb des Zeitintervalls T kontinuierlich vor einer aktuellen Zeit existieren; und dann Eintreten in S3, bis sie existieren;
S3: Bestimmen gemäß den elektronischen Horizontdaten, ob die zwei Abtastpunkte auf derselben Straße sind; falls ja, Eintreten in S4; andernfalls Zurückkehren zu S2;
S4: Bestimmen gemäß den elektronischen Horizontdaten, ob die Straße zwischen den zwei Abtastpunkten eine gerade Straße ist; falls ja, Eintreten in S5; andernfalls Zurückkehren zu S2;
S5: Bestimmen, ob eine Differenz zwischen den Motordrehmomenten, die dem Nach-Abtastpunkt und dem Vor-Abtastpunkt entsprechen, größer als ein Drehmomentdifferenz-Schwellenwert ist; falls ja, Eintreten in S6; andernfalls Zurückkehren zu S2; und
S6: Berechnen der Fahrzeugmasse gemäß den Motordrehmomenten und den Gradientenwerten, die den zwei Abtastpunkten entsprechen.

2. Verfahren zum Berechnen einer Fahrzeugmasse gemäß Anspruch 1, wobei eine Berechnungsformel der Fahrzeugmasse in Schritt S6 ist:

$$m = \frac{F_2 - F_1}{\theta_2 - \theta_1}$$

wobei m für die Fahrzeugmasse steht, $F_2$ bzw. $F_1$ für durch die Motordrehmomente der Nach- bzw. Vor-Abtastpunkte berechnete Antriebskräfte stehen und $\theta_2$ bzw. $\theta_1$ für die Gradientenwerte der Nach- bzw. Vor-Abtastpunkte stehen.

3. Verfahren zum Berechnen einer Fahrzeugmasse gemäß Anspruch 1, wobei der Gradientenwertdifferenz-Schwellenwert größer als 0,4 ist.

4. Verfahren zum Berechnen einer Fahrzeugmasse gemäß Anspruch 1, wobei der Drehmomentdifferenz-Schwellenwert größer als 40 % einer maximalen Ausgangsleistung eines Fahrzeugmotors ist.

**5.** Endgerät zum Berechnen einer Fahrzeugmasse, aufweisend einen Prozessor, einen Speicher und ein im Speicher gespeichertes und auf dem Prozessor ausgeführtes Computerprogramm, wobei bei Ausführen des Computerprogramms durch einen Prozessor die Schritte des Verfahrens gemäß einem der Ansprüche 1 bis 4 durchgeführt werden.

**6.** Computerlesbares Speichermedium, das ein Computerprogramm speichert, wobei bei Ausführen eines Computerprogramms durch einen Prozessor die Schritte des Verfahrens gemäß einem der Ansprüche 1 bis 4 durchgeführt werden.

**Revendications**

**1.** Procédé de calcul de la masse d'un véhicule, comprenant les étapes suivantes :

S1 : collecter en temps réel des données de couple moteur et des données d'horizon électronique d'un véhicule, et définir un intervalle de temps T ;
S2 : déterminer, en fonction des données d'horizon électronique, si deux points d'échantillonnage dont la différence de valeur de gradient entre un point de post-échantillonnage et un point de pré-échantillonnage est supérieure à un seuil de différence de valeur de gradient existent dans l'intervalle de temps T continuellement avant le temps actuel ; et puis entrer en S3 jusqu'à ce qu'ils existent ;
S3 : déterminer, en fonction des données d'horizon électronique, si les deux points d'échantillonnage sont sur une même route ; dans l'affirmative, entrer en S4 ; dans le cas contraire, retourner en S2 ;
S4 : déterminer, en fonction des données d'horizon électronique, si la route entre les deux points d'échantillonnage est une route droite ; dans l'affirmative, entrer en S5 ; dans le cas contraire, retourner en S2 ;
S5 : déterminer si une différence entre les couples moteur correspondant au point de post-échantillonnage et au point de pré-échantillonnage est supérieure à un seuil de différence de couple ; dans l'affirmative, entrer en S6 ; dans le cas contraire, retourner en S2 ; et
S6 : calculer la masse du véhicule en fonction des couples moteur et des valeurs de gradient correspondant aux deux points d'échantillonnage.

**2.** Procédé de calcul de la masse d'un véhicule selon la revendication 1, dans lequel une formule de calcul de la masse du véhicule à l'étape S6 est :

$$m = \frac{F_2 - F_1}{\theta_2 - \theta_1}$$

où m représente la masse du véhicule ; $F_2$ et $F_1$ représentent des forces motrices calculées par les couples moteur des points de post-échantillonnage et de pré-échantillonnage, respectivement ; et $\theta_2$ et $\theta_1$ représentent les valeurs de gradient des points de post-échantillonnage et de pré-échantillonnage, respectivement.

**3.** Procédé de calcul de la masse d'un véhicule selon la revendication 1, dans lequel le seuil de différence de valeur de gradient est supérieur à 0,4.

**4.** Procédé de calcul de la masse d'un véhicule selon la revendication 1, dans lequel le seuil de différence de couple est supérieur à 40 % de la puissance de sortie maximale d'un moteur du véhicule.

**5.** Dispositif terminal de calcul de la masse d'un véhicule, comprenant un processeur, une mémoire et un programme d'ordinateur stocké dans la mémoire et exécuté sur le processeur, dans lequel, lorsque le programme d'ordinateur est exécuté par un processeur, les étapes du procédé selon l'une des revendications 1 à 4 sont mises en œuvre.

**6.** Support de stockage lisible par ordinateur stockant un programme d'ordinateur, dans lequel, lorsque un programme d'ordinateur est exécuté par un processeur, les étapes du procédé selon l'une des revendications 1 à 4 sont mises en œuvre.

Collecting engine torque data and electronic horizon data of a vehicle in real time, and setting a time interval T

Presence of $\theta_2$-$\theta_1$>H within T — No

Yes

Be on the same road — No

Yes

Straight road — No

Yes

$F_2$-$F_1$>D — No

Yes

Calculate the mass of the vehicle according to the engine torque and gradient values corresponding to the two sampling points

**FIG. 1**

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 101443636 A
- CN 108896149 A

- US 10094704 B2